# EUROPEAN PATENT APPLICATION

(11) **EP 4 835 022 A1**
(43) Date of publication of application: **04.11.2026**
(21) Application number: 24913072.5
(22) Date of filing: 27.12.2024
(51) Int. Cl.: C09D 171/02, B05D 1/02, B05D 7/24, C08G 65/336, C08K 3/26, C08K 5/00, C08K 5/101, C08L 71/02, C08L 77/00, C09D 5/46, C09D 7/20, C09D 7/61, C09D 7/63, C09D 7/65

(54) **CURABLE COMPOSITION FOR SPRAY COATING**

(30) Priority: 28.12.2023 JP 2023222454; 28.03.2024 JP 2024053724
(71) Applicant: KANEKA CORPORATION, Osaka-shi, Osaka 530-8288 (JP)
(72) Inventor: MICHINOBU, Takao, Hyogo 676-8688 (JP); HASHIMOTO, Takahiro, Hyogo 676-8688 (JP); MORIMOTO, Takashi, Hyogo 676-8688 (JP); KAWAKAMI, Atsushi, Hyogo 676-8688 (JP); ANDO, Katsuhiro, Hyogo 676-8688 (JP); ONISHI, Yoshinobu, Hyogo 676-8688 (JP); WAKABAYASHI, Katsuyu, Hyogo 676-8688 (JP)
(74) Representative: Vossius & Partner Patentanwälte Rechtsanwälte mbB
(86) International application number: PCT/JP2024/046318
(87) International publication number: WO 2025/143186

(57) **Abstract**

A curable composition for spray coating contains 100 parts by weight of a polyoxyalkylene polymer (A) having a reactive silicon group, 10 to 50 parts by weight of a hydrocarbon diluent (B), 30 to 90 parts by weight of a plasticizer (C) that is a dicarboxylic acid ester containing a cyclic hydrocarbon group, and 0.6 to 7 parts by weight of a polyamide rheology modifier (D). A cured coating is produced by spraying the curable composition onto a surface of a substrate and curing the sprayed composition.

## Description

### Technical Field

The present invention relates to a curable composition for spray coating that contains a polyoxyalkylene polymer having a reactive silicon group, a cured coating formed using the composition, and a method for producing the cured coating.

### Background Art

An organic polymer having a silicon group that contains a hydroxy or hydrolyzable group on a silicon atom and is capable of forming a siloxane bond through a hydrolysis-condensation reaction (hereinafter, this silicon group is also referred to as a "reactive silicon group") undergoes a reaction under the action of moisture or the like, even at room temperature. Crosslinking of such an organic polymer via a siloxane condensation reaction of reactive silicon groups is known to yield a rubbery cured product.

Among such organic polymers, polyoxyalkylene polymers having reactive silicon groups are widely used in various products such as sealing materials, adhesives, and paints, because cured products of the polymers exhibit a good balance of performance characteristics, including mechanical properties, weather resistance, and dynamic durability.

Spray coating has been investigated as a method for efficiently applying a curable composition containing a polyoxyalkylene polymer having a reactive silicon group to a substrate.

Patent Literature 1 discloses a curable composition for spray coating that contains a polymer having a reactive silicon group, a plasticizer, a filler having a specific particle diameter, and a catalyst. The literature discloses that the composition exhibits excellent sprayability and depth curability, and further achieves good tile retention (adhesiveness). The literature discloses a tile adhesive and a sealing material as products in which the composition is used.

Patent Literature 2 discloses a sprayable composition containing an α,ω-telechelic silyl-terminated polymer such as a silylated polyether, and a glycol diester serving as a plasticizer. The literature discloses that a thixotropic agent may be incorporated into the composition.

### Citation List

### Patent Literature

PTL 1: Japanese Laid-Open Patent Application Publication No. 2023-7423
PTL 2: Japanese Laid-Open Patent Application Publication (Translation of PCT Application) No. 2019-530769

### Summary of Invention

### Technical Problem

A method of using a curable composition containing a reactive silicon group-containing polyoxyalkylene polymer has been investigated, in which the composition is sprayed onto a substrate such as a wall surface of a building, and then cured to form a waterproof coating.

In such applications, it is desirable to employ an airless spray gun to complete spray coating of a large-area substrate within a short period of time. In this case, the curable composition is required to possess properties (sprayability) that facilitate spray coating using such a coating device. Additionally, it is required that after spray coating, the applied coating should resist sagging before the composition is completely cured.

Generally, the sprayability of a composition improves as the viscosity of the composition decreases. However, a decrease in viscosity tends to reduce sagging resistance. Accordingly, it is not easy to ensure both good sprayability and high sagging resistance.

It is commonly known practice to incorporate a rheology modifier as a component to impart sagging resistance to a curable composition.

Patent Literature 1 does not describe the use of the curable composition for forming a waterproof coating, nor does it disclose that a rheology modifier may be used. Accordingly, it is difficult to achieve sufficient sagging resistance with the disclosed technique. Furthermore, in Examples of this literature, a spray gun utilizing air pressure is employed as a coating device. The literature does not take into consideration spray coating of a large-area substrate, and fails to disclose any formulation that enables such spray coating.

Patent Literature 2 describes the incorporation of a rheology modifier, but teaches that spray coating is performed at high pressure. A study conducted by the present inventors has revealed that the formulation containing a plasticizer (glycol diester) disclosed in the literature cannot achieve sufficient sprayability and requires improvement.

The present inventors have investigated the incorporation of a low-volatility diluent as a component for reducing the viscosity of a composition, as well as the incorporation of a rheology modifier for imparting sagging resistance. However, it has been found that incorporating such a diluent may cause bleed-out of a liquid component from the surface of the resulting cured coating.

In view of the above circumstances, the present invention aims to provide a curable composition for spray coating that contains a reactive silicon group-containing polyoxyalkylene polymer, the curable composition being capable of exhibiting both good sprayability and high resistance to sagging after spray coating, and being resistant to bleed-out after curing.

### Solution to Problem

As a result of intensive studies aimed at solving the above problem, the present inventors have found that when a polyoxyalkylene polymer having a reactive silicon group is blended with a specific rheology modifier, a specific diluent, and a specific plasticizer, the resulting composition can exhibit both good sprayability and high resistance to sagging after spray coating.

The inventors have further found that limiting the respective amounts of the specific diluent and the specific plasticizer enables the composition to avoid bleed-out after curing. Based on these findings, the inventors have completed the present invention.

Specifically, the present invention relates to a curable composition for spray coating, the curable composition containing:
100 parts by weight of a polyoxyalkylene polymer (A) having a reactive silicon group;
10 to 50 parts by weight of a hydrocarbon diluent (B);
30 to 90 parts by weight of a plasticizer (C) that is a dicarboxylic acid ester containing a cyclic hydrocarbon group; and
0.6 to 7 parts by weight of a polyamide rheology modifier (D).

The present invention also relates to a cured coating formed by spraying the curable composition and curing the sprayed composition.

The present invention further relates to a method for producing a cured coating, the method including spraying the curable composition onto a surface of a substrate, and curing the sprayed composition.

### Advantageous Effects of Invention

The present invention can provide a curable composition for spray coating that contains a reactive silicon group-containing polyoxyalkylene polymer, the curable composition being capable of exhibiting both good sprayability and high resistance to sagging after spray coating, and being resistant to bleed-out after curing.

### Description of Embodiments

Hereinafter, embodiments of the present invention will be described.

### <<Polyoxyalkylene Polymer (A)>>

A curable composition for spray coating according to the present disclosure contains a polyoxyalkylene polymer (A) having a reactive silicon group as a curable resin.

### <Reactive Silicon Group>

The reactive silicon group of the polyoxyalkylene polymer (A) can be represented by the following formula (1).

-Si(R¹)₃₋ₐX¹ₐ (1)

In the formula (1), the R¹ groups are each independently a monovalent hydrocarbon group having 1 to 20 carbon atoms. The number of carbon atoms in the hydrocarbon group denoted by R¹ is preferably from 1 to 12, more preferably from 1 to 6, and particularly preferably from 1 to 4. The hydrocarbon group may be an unsubstituted hydrocarbon group or a substituted hydrocarbon group.

The hydrocarbon group denoted by R¹ may have a heteroatom-containing group as a substituent. The heteroatom-containing group is a group containing a heteroatom. Atoms other than carbon and hydrogen atoms are defined herein as "heteroatoms."

Suitable examples of heteroatoms include N, O, S, P, Si, and halogen atoms. In the heteroatom-containing group, the total number of carbon atoms and heteroatoms is preferably from 1 to 10, more preferably from 1 to 6, and even more preferably from 1 to 4.

Suitable examples of the heteroatom-containing group include: a hydroxy group; a mercapto group; halogen atoms such as Cl, Br, I, and F; a nitro group; a cyano group; alkoxy groups such as methoxy, ethoxy, *n*-propyloxy, and isopropyloxy groups; alkylthio groups such as methylthio, ethylthio, *n*-propylthio, and isopropylthio groups; acyl groups such as acetyl, propionyl, and butanoyl groups; acyloxy groups such as acetyloxy, propionyloxy, and butanoyloxy groups; substituted or unsubstituted amino groups such as amino, methylamino, ethylamino, dimethylamino, and diethylamino groups; substituted or unsubstituted aminocarbonyl groups such as aminocarbonyl, methylaminocarbonyl, ethylaminocarbonyl, dimethylaminocarbonyl, and diethylaminocarbonyl groups; and a cyano group.

When R¹ is a hydrocarbon group having a heteroatom-containing group, the total number of carbon atoms and heteroatoms in R¹ is preferably from 2 to 30, more preferably from 2 to 18, even more preferably from 2 to 10, and particularly preferably from 2 to 6.

Specific examples of the hydrocarbon group having 1 to 20 carbon atoms that is denoted by R¹ include: alkyl groups such as methyl, ethyl, *n*-propyl, isopropyl, *n*-butyl, isobutyl, *sec*-butyl, *tert*-butyl, *n*-pentyl, *n*-hexyl, *n*-heptyl, *n*-octyl, 2-ethyl-*n*-hexyl, *n*-nonyl, *n*-decyl, *n-*undecyl, *n*-dodecyl, *n*-tridecyl, *n*-tetradecyl, *n*-pentadecyl, *n*-hexadecyl, *n*-octadecyl, *n-*nonadecyl, and *n*-icosyl groups; alkenyl groups such as vinyl, 2-propenyl, 3-butenyl, and 4-pentenyl groups; cycloalkyl groups such as cyclopropyl, cyclobutyl, cyclopentyl, cyclohexyl, cycloheptyl, and cyclooctyl groups; aryl groups such as a phenyl, naphthalen-1-yl, naphthalen-2-yl, *o*-phenylphenyl, *m*-phenylphenyl, and *p*-phenylphenyl groups; and aralkyl groups such as benzyl, phenethyl, naphthalen-1-ylmethyl, and naphthalen-2-ylmethyl groups.

These hydrocarbon groups may be substituted with the heteroatom-containing group described above, and such substituted hydrocarbon groups are also preferred as R¹.

Suitable examples of R¹ include: alkyl groups such as methyl and ethyl groups; alkyl groups having a heteroatom-containing group, such as chloromethyl and methoxymethyl groups; cycloalkyl groups such as a cyclohexyl group; aryl groups such as a phenyl group; and aralkyl groups such as a benzyl group. R¹ is preferably a methyl, methoxymethyl, or chloromethyl group. Methyl and methoxymethyl groups are more preferred, and a methyl group is even more preferred.

The X¹ groups are each independently a hydroxy group or a hydrolyzable group. Specific examples of X¹ include a hydroxy group, halogens, and alkoxy, acyloxy, ketoximate, amino, amide, acid amide, aminooxy, mercapto, and alkenyloxy groups. Among these, alkoxy groups are more preferred in terms of moderate hydrolyzability and ease of handling. Generally, alkoxy groups exhibit higher reactivity as the number of carbon atoms decreases. That is, the reactivity decreases in the order of methoxy, ethoxy, and propoxy groups. By taking advantage of this characteristic, the specific structure of the reactive silicon group can be selected as appropriate depending on the production method and the intended use of the polyoxyalkylene polymer (A).

The subscript a denotes an integer of 1, 2, or 3. In order to further enhance the strength of the resulting cured product, a is preferably 2 or 3. In order to reliably ensure both good strength and elongation of the cured product, a is more preferably 2.

Specific examples of the reactive silicon group of the polyoxyalkylene polymer (A) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (*N,N*-diethylaminomethyl)dimethoxysilyl, and (*N,N-*diethylaminomethyl)diethoxysilyl groups. Among these, dimethoxymethylsilyl, trimethoxysilyl, triethoxysilyl, and (methoxymethyl)dimethoxysilyl groups are preferred to obtain a cured product having good mechanical properties. From the standpoint of reaction activity, trimethoxysilyl, (chloromethyl)dimethoxysilyl, and (methoxymethyl)dimethoxysilyl groups are more preferred. To improve curability, a trimethoxysilyl group is particularly preferred.

The average number of reactive silicon groups per molecule in the polyoxyalkylene polymer (A) is preferably from 1 to 7, more preferably from 1.1 to 3.4, and particularly preferably from 1.2 to 2.6 from the standpoint of the balance between flexibility and recovery performance.

In order to obtain a favorable rubbery cured product, the reactive silicon group of the polyoxyalkylene polymer (A) is preferably present at an end of the main chain of the polymer (A). In order to ensure that the curable composition exhibits good curability and readily develops rubbery elastic behavior, the average number of reactive silicon groups per end in the polymer (A) is preferably 0.5 or more, more preferably 0.6 or more, even more preferably 0.7 or more, still more preferably 0.8 or more, and particularly preferably 0.85 or more.

The main chain structure of the polyoxyalkylene polymer (A) may be linear or branched. In the case where the polyoxyalkylene polymer (A) is linear, for example, a cured coating formed by spraying the composition onto a substrate exhibits good conformability even when the substrate is made of a material that tends to undergo thermal expansion and contraction.

The main chain of the polyoxyalkylene polymer (A) is a polymer containing repeating units represented by -R¹³-O- (wherein R¹³ is a linear or branched alkylene group having 1 to 14 carbon atoms). R¹³ is more preferably a linear or branched alkylene group having 2 to 4 carbon atoms. Specific examples of the repeating units represented by -R¹³-O-include -CH₂O-, -CH₂CH₂O-, -CH₂CH(CH₃)O-, -CH₂C(CH₃)(CH₃)O-, and - CH₂CH₂CH₂CH₂O-. Among these, -CH₂CH₂O- and -CH₂CH(CH₃)O- are preferred, and - CH₂CH(CH₃)O- is more preferred.

In particular, a polyoxypropylene polymer in which oxypropylene repeating units constitute 50 wt% or more, preferably 80 wt% or more, of the main chain structure is preferred because such a polymer is amorphous and has relatively low viscosity.

The polyoxyalkylene polymer (A) may be a polyoxyalkylene polymer containing other bonds such as urethane bonds, urea bonds, ester bonds, and amide bonds, in the main chain structure. However, in order to obtain a curable composition having excellent storage stability and workability, the polyoxyalkylene polymer (A) is preferably a polyoxyalkylene polymer having no urethane, urea, ester, or amide bonds in the main chain structure.

The number-average molecular weight of the polyoxyalkylene polymer (A) is not limited to a particular range. The number-average molecular weight, expressed as a polystyrene-equivalent molecular weight as determined by GPC analysis, is preferably from 5,000 to 100,000, more preferably from 10,000 to 50,000, particularly preferably from 12,000 to 40,000, and most preferably from 13,000 to 30,000. When the number-average molecular weight falls within these ranges, a moderate amount of reactive silicon groups are introduced. Accordingly, high strength can be readily imparted to the polyoxyalkylene polymer (A) while keeping the production cost within an appropriate range.

The polyoxyalkylene polymer (A) is not limited to having a particular molecular weight distribution (Mw/Mn), but preferably has a narrow molecular weight distribution. Specifically, the dispersity Mw/Mn is preferably 1.6 or less, more preferably 1.4 or less, even more preferably 1.3 or less, and particularly preferably 1.2 or less. A dispersity within these ranges is preferred in terms of ease of handling, particularly workability, and adhesiveness. The molecular weight distribution of the polyoxyalkylene polymer (A) can be determined from the number-average and weight-average molecular weights obtained by GPC analysis.

### <Method for Producing Reactive Silicon Group-Containing Polyoxyalkylene Polymer (A)>

The following describes a method for producing the reactive silicon group-containing polyoxyalkylene polymer (A).

The reactive silicon group-containing polyoxyalkylene polymer (A) can be produced by introducing a reactive silicon group into a precursor polymer capable of receiving the reactive silicon group. Specifically, the reactive silicon group-containing polyoxyalkylene polymer (A) can be produced as follows. First, an olefin group is introduced into a hydroxy-terminated polyoxyalkylene polymer (d1) by exploiting the reactivity of the hydroxy groups to obtain an olefin group-containing precursor polymer. The precursor polymer is then reacted with a reactive silicon group-containing compound that is reactive with the olefin group, thereby introducing the reactive silicon group into the polymer.

### (Polymerization)

The backbone of the polyoxyalkylene polymer can be formed by polymerizing an epoxy compound with a hydroxy group-containing initiator using a conventionally known method. This polymerization yields the hydroxy-terminated polyoxyalkylene polymer (d1). The method for polymerization is not limited to a particular technique. A polymerization method employing a double metal cyanide complex catalyst such as a zinc hexacyanocobaltate-glyme complex is preferred to obtain a hydroxy-terminated polymer with a low dispersity (Mw/Mn).

Examples of the hydroxy group-containing initiator include, but are not limited to, ethylene glycol, propylene glycol, glycerin, pentaerythritol, low-molecular-weight polyoxypropylene glycol, low-molecular-weight polyoxypropylene triol, butanol, allyl alcohol, methanol, ethanol, propanol, butanol, pentanol, hexanol, low-molecular-weight polyoxypropylene monoallyl ether, and low-molecular-weight polyoxypropylene monoalkyl ether. When a polymer having three or more main chain ends per molecule is to be obtained, an initiator having three or more hydroxy groups, such as glycerin, pentaerythritol, or low-molecular-weight polyoxypropylene triol, may be used.

Examples of the epoxy compound include, but are not limited to: alkylene oxides such as ethylene oxide and propylene oxide; and glycidyl ethers such as methyl glycidyl ether and butyl glycidyl ether. Propylene oxide is preferred.

### (Reaction with Alkali Metal Salt)

When introducing an olefin group into the hydroxy-terminated polyoxyalkylene polymer (d1), it is preferable first to convert the terminal hydroxy group into an alkoxide group by reacting an alkali metal salt with the polyoxyalkylene polymer (d1). Alternatively, a double metal cyanide complex catalyst may be used instead of the alkali metal salt. This reaction results in the formation of an alkoxide-terminated polyoxyalkylene polymer (d2).

Examples of the alkali metal salt include, but are not limited to, sodium hydroxide, sodium alkoxides, potassium hydroxide, potassium alkoxides, lithium hydroxide, lithium alkoxides, cesium hydroxide, and cesium alkoxides. From the standpoint of ease of handling and solubility, sodium hydroxide, sodium methoxide, sodium ethoxide, sodium *tert*-butoxide, potassium hydroxide, potassium methoxide, potassium ethoxide, and potassium *tert*-butoxide are preferred, and sodium methoxide and sodium *tert*-butoxide are more preferred. In terms of availability, sodium methoxide is preferred. A solution of the alkali metal salt in a solvent may be used in the reaction.

### (Reaction with Electrophile (d3))

The alkoxide-terminated polyoxyalkylene polymer (d2) obtained as described above is reacted with an olefin group-containing electrophile (d3), whereby the terminal alkoxide structure can be converted into a structure containing an olefin group. This reaction results in the formation of a polyoxyalkylene polymer (d4) having a terminal structure that contains the olefin group.

The olefin group-containing electrophile (d3) is not limited to a particular compound, and may be any compound capable of reacting with the terminal alkoxide structure of the polyoxyalkylene polymer (d2) to introduce an olefin group into the polyoxyalkylene polymer. Examples of the electrophile (d3) include an olefin group-containing organic halogenated compound (d3-1) and an olefin group-containing epoxy compound (d3-2).

The olefin group-containing organic halogenated compound (d3-1), which is one form of the electrophile (d3), can undergo a halogen substitution reaction with the terminal alkoxide structure to form an ether bond, thereby introducing an olefin group-containing terminal structure into the polyoxyalkylene polymer.

Specific examples of the olefin group-containing organic halogenated compound (d3-1) include, but are not limited to, vinyl chloride, allyl chloride, methallyl chloride, vinyl bromide, allyl bromide, methallyl bromide, vinyl iodide, allyl iodide, and methallyl iodide. Allyl chloride and methallyl chloride are preferred in terms of ease of handling. Methallyl chloride, methallyl bromide, and methallyl iodide are preferred to increase the average ratio of the number of reactive silicon groups to the number of polymer backbone ends.

A halogenated hydrocarbon compound having a carbon-carbon triple bond may also be used as the olefin group-containing organic halogenated compound (d3-1). Examples of the carbon-carbon triple bond-containing halogenated hydrocarbon compound include, but are not limited to, propargyl chloride, propargyl bromide, and propargyl iodide. A halogenated hydrocarbon compound having a carbon-carbon double bond may be used together with the carbon-carbon triple bond-containing halogenated hydrocarbon compound.

The olefin group-containing epoxy compound (d3-2), which is another form of the electrophile (d3), can undergo an epoxy ring-opening addition reaction with the terminal alkoxide structure to form an ether bond, thereby introducing a terminal structure containing an olefin group and a hydroxy group into the polyoxyalkylene polymer. In the ring-opening addition reaction, one or more molecules of the epoxy compound (d3-2) can be added per terminal alkoxide structure by adjusting the amount of the epoxy compound (d3-2) relative to the terminal alkoxide structure or by adjusting the reaction conditions.

Specific examples of the olefin group-containing epoxy compound (d3-2) include, but are not limited to, allyl glycidyl ether, methallyl glycidyl ether, glycidyl acrylate, glycidyl methacrylate, and butadiene monoxide, which are preferred in terms of reaction activity. Allyl glycidyl ether is particularly preferred.

When the alkoxide-terminated polyoxyalkylene polymer (d2) is reacted with the olefin group-containing epoxy compound (d3-2) as described above, an alkoxide is newly formed through ring opening of the epoxy group. Thus, the polyoxyalkylene polymer (d2) may first be reacted with the epoxy compound (d3-2), and the resulting polymer may subsequently be reacted with the olefin group-containing organic halogenated compound (d3-1) described above.

### (Introduction of Reactive Silicon Group)

After the polyoxyalkylene polymer (d4) having a terminal structure containing an olefin group or the polyoxyalkylene polymer (d5) having a terminal structure containing a carbon-carbon triple bond (the precursor polymer) is obtained as described above, the precursor polymer is subjected to a hydrosilylation reaction with a reactive silicon group-containing hydrosilane compound (d6). Through the hydrosilylation reaction, a reactive silicon group can be introduced into the polymer. In this way, the reactive silicon group-containing polyoxyalkylene polymer (A) is produced. The hydrosilylation reaction is advantageous in that the reaction is easy to carry out, that the amount of the reactive silicon groups to be introduced can be easily adjusted, and that the resulting polymer exhibits stable physical properties.

Specific examples of the reactive silicon group-containing hydrosilane compound (d6) include: halosilanes such as trichlorosilane, dichloromethylsilane, chlorodimethylsilane, dichlorophenylsilane, (chloromethyl)dichlorosilane, (dichloromethyl)dichlorosilane, bis(chloromethyl)chlorosilane, (methoxymethyl)dichlorosilane, (dimethoxymethyl)dichlorosilane, and bis(methoxymethyl)chlorosilane; alkoxysilanes such as trimethoxysilane, triethoxysilane, dimethoxymethylsilane, diethoxymethylsilane, dimethoxyphenylsilane, ethyldimethoxysilane, methoxydimethylsilane, ethoxydimethylsilane, (chloromethyl)methylmethoxysilane, (chloromethyl)dimethoxysilane, (chloromethyl)diethoxysilane, bis(chloromethyl)methoxysilane, (methoxymethyl)methylmethoxysilane, (methoxymethyl)dimethoxysilane, bis(methoxymethyl)methoxysilane, (methoxymethyl)diethoxysilane, (ethoxymethyl)diethoxysilane, (3,3,3-trifluoropropyl)dimethoxysilane, (*N,N-*diethylaminomethyl)dimethoxysilane, (*N,N*-diethylaminomethyl)diethoxysilane, [(chloromethyl)dimethoxysilyloxy]dimethylsilane, [(chloromethyl)diethoxysilyloxy]dimethylsilane, [(methoxymethyl)dimethoxysilyloxy]dimethylsilane, [(methoxymethyl)diethoxysilyloxy]dimethylsilane, [(diethylaminomethyl)dimethoxysilyloxy]dimethylsilane, and [(3,3,3-trifluoropropyl)dimethoxysilyloxy]dimethylsilane; acyloxysilanes such as diacetoxymethylsilane and diacetoxyphenylsilane; ketoximatosilanes such as bis(dimethylketoximato)methylsilane and bis(cyclohexylketoximato)methylsilane; and isopropenyloxysilanes (deacetonated type) such as triisopropenyloxysilane, (chloromethyl)diisopropenyloxysilane, and (methoxymethyl)diisopropenyloxysilane.

The hydrosilylation reaction is preferably carried out in the presence of a hydrosilylation catalyst to accelerate the reaction. Known examples of the hydrosilylation catalyst include metals such as cobalt, nickel, iridium, platinum, palladium, rhodium, and ruthenium and complexes of these metals, any of which may be used in the hydrosilylation reaction. Specific examples of the catalyst include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂; platinum-vinylsiloxane complexes such as Pt{(vinyl)Me₂SiOSiMe₂(vinyl)} and Pt{Me(vinyl)SiO}₄; platinum-phosphine complexes such as Pt(PPh₃)₄ and Pt(PBu₃)₄; and platinum-phosphite complexes such as Pt{P(OPh)₃}₄.

It is known that, when a platinum-based hydrosilylation catalyst is used, side reactions such as isomerization to form 1-propenyl groups (internal olefins) and propenyl group formation via hydrogenation may occur. These side reactions cause a reduction in the degree of reactive silicon group introduction relative to the allyl groups (i.e., the average number of reactive silicon groups per end). To suppress such side reactions and enhance the degree of reactive silicon group introduction, for example, Japanese Laid-Open Patent Application Publication No. 2021-11456 proposes the use of a ruthenium complex having a specific ligand.

A specific example is a method in which a ruthenium complex and a halogen-substituted olefin compound (such as 1,4-dibromobenzene, 1-bromo-3,5-difluorobenzene, 1-bromo-2,6-difluorobenzene, 1,4-diiodobenzene, or 1,3,5-tribromobenzene) are used in the hydrosilylation reaction. The use of such a method can provide a polymer in which the average number of reactive silicon groups per polymer end is 0.85 or more. When such a polymer is used in the present disclosure, a curable composition capable of forming a cured coating that exhibits sufficient strength can be obtained.

Another method that may be used to produce the reactive silicon group-containing polyoxyalkylene polymer (A) is a method in which the hydroxy-terminated polyoxyalkylene polymer (d1) (the precursor polymer) is reacted with a compound (d7) having a reactive silicon group and an isocyanate group in the molecule to form a urethane bond, thereby introducing the reactive silicon group into the polyoxyalkylene polymer.

The compound (d7) having a reactive silicon group and an isocyanate group in the molecule is not limited to a particular compound, and may be any compound that has in the molecule both a reactive silicon group and an isocyanate group capable of undergoing a urethane-forming reaction with the hydroxy group of the polyoxyalkylene polymer (d1). Specific examples of the compound (d7) include (3-isocyanatopropyl)trimethoxysilane, (3-isocyanatopropyl)dimethoxymethylsilane, (3-isocyanatopropyl)triethoxysilane, (3-isocyanatopropyl)diethoxymethylsilane, (isocyanatomethyl)trimethoxysilane, (isocyanatomethyl)triethoxysilane, (isocyanatomethyl)dimethoxymethylsilane, and (isocyanatomethyl)diethoxymethylsilane.

The urethane-forming reaction may be carried out without using any urethane-forming catalyst. In order to increase the reaction rate or the degree of conversion, the urethane-forming reaction may be carried out in the presence of a urethane-forming catalyst. Examples of urethane-forming catalysts that can be used include conventionally known urethane-forming catalysts such as those listed in Polyurethanes: Chemistry and Technology, Part I, Table 30, Chapter 4, Saunders and Frisch, Interscience Publishers, New York, 1963. Specific examples include, but are not limited to, organotin compounds, bismuth compounds, and base catalysts such as organic amines.

Yet another method that may be used to produce the reactive silicon group-containing polyoxyalkylene polymer (A) is a method in which the hydroxy-terminated polyoxyalkylene polymer (d1) is reacted with an excess amount of a polyisocyanate compound (d8) to yield an isocyanate-terminated polymer (the precursor polymer) and the precursor polymer is then reacted with a compound (d9) having a reactive silicon group and a group (such as an amino group) that is reactive with the isocyanate group of the polymer.

Examples of the polyisocyanate compound (d8) include: aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

Examples of the compound (d9) having a reactive silicon group and a group reactive with an isocyanate group include: amino group-containing silanes such as γ-aminopropyltrimethoxysilane, γ-aminopropyldimethoxymethylsilane, γ-aminopropyltriethoxysilane, *N*-(β-aminoethyl)-γ-aminopropyltrimethoxysilane, *N*-(β-aminoethyl)-γ-aminopropyldimethoxymethylsilane, *N*-(β-aminoethyl)-γ-aminopropyltriethoxysilane, γ-(*N*-phenyl)aminopropyltrimethoxysilane, γ-(*N-*phenyl)aminopropyldimethoxymethylsilane, *N*-ethylaminoisobutyltrimethoxysilane, *N-*ethylaminoisobutyldimethoxymethylsilane, *N*-cyclohexylaminomethyltrimethoxysilane, and *N-*cyclohexylaminomethyldimethoxymethylsilane; hydroxy group-containing silanes such as γ-hydroxypropyltrimethoxysilane and γ-hydroxypropyldimethoxymethylsilane; and mercapto group-containing silanes such as γ-mercaptopropyltrimethoxysilane and γ-mercaptopropyldimethoxymethylsilane.

Yet another method that may be used to produce the reactive silicon group-containing polyoxyalkylene polymer (A) is a method in which the polyoxyalkylene polymer (d4) (the precursor polymer) having a terminal structure containing an olefin group is reacted with a compound (d10) having a reactive silicon group and a mercaptan group in the molecule to form a sulfide bond via addition of the mercaptan group to the olefin group, thereby introducing the reactive silicon group into the polyoxyalkylene polymer.

The compound (d10) having a reactive silicon group and a mercaptan group in the molecule is not limited to a particular compound, and may be any compound that has in the molecule both a reactive silicon group and a mercaptan group capable of undergoing an addition reaction to the olefin group of the polyoxyalkylene polymer (d4). Specific examples of the compound (d10) include (3-mercaptopropyl)methyldimethoxysilane, (3-mercaptopropyl)trimethoxysilane, (3-mercaptopropyl)methyldiethoxysilane, (3-mercaptopropyl)triethoxysilane, (mercaptomethyl)methyldimethoxysilane, (mercaptomethyl)trimethoxysilane, (mercaptomethyl)methyldiethoxysilane, and (mercaptomethyl)triethoxysilane.

The addition reaction of the mercaptan group to the olefin group may be carried out without using any radical initiator. In order to increase the reaction rate or the degree of conversion, the addition reaction may be carried out in the presence of a radical initiator. The radical initiator used may be any conventionally known radical initiator. Specific examples include, but are not limited to, azo initiators and peroxide initiators.

Among known radical initiators, catalysts having low activity toward reactive silicon groups are preferred. From this standpoint, azo initiators are particularly preferred, such as 2,2'-azobis(isobutyronitrile) (AIBN), 2,2'-azobis(2-methylbutyronitrile) (V-59), and 2,2'-azobis(1-methylcyclohexanecarbonitrile) (V-40).

### <<Hydrocarbon Diluent (B)>>

The curable composition for spray coating according to the present disclosure contains a hydrocarbon diluent (B). The incorporation of the hydrocarbon diluent (B), together with a plasticizer (C) described later, can reduce the viscosity of the curable composition for spray coating, thereby improving the sprayability of the composition.

The hydrocarbon diluent (B) is a compound that contains a hydrocarbon compound as a main component and that is liquid at normal temperature. The hydrocarbon diluent may be an aromatic hydrocarbon or a non-aromatic hydrocarbon. From the standpoint of reducing odor, a non-aromatic hydrocarbon is preferred.

In order to reduce the emission of volatile organic compounds (VOCs) from the curable composition and a cured product obtained by curing the composition, the hydrocarbon diluent (B) is preferably non-volatile. Specifically, the boiling point of the hydrocarbon diluent (B) is preferably 250 °C or higher, more preferably 280 °C or higher, even more preferably 290 °C or higher, and particularly preferably 300 °C or higher. When the hydrocarbon diluent (B) has an initial boiling point and a final boiling point, the term "boiling point" as used herein refers to the initial boiling point.

High-boiling-point diluents usable as the hydrocarbon diluent (B) include naphthenic solvents and paraffinic solvents. These hydrocarbon solvents are preferably hydrotreated. One of these solvents may be used alone, or two or more may be used in combination. The term "paraffinic solvents" as used herein includes isoparaffinic solvents.

Specific examples of the hydrocarbon diluent (B) include, but are not limited to, commercially available products such as TOTAL FLUID D-170, Hydroseal HY, IP Solvent 2835, and Exxsol D130. Among these, TOTAL FLUID D-170 and Hydroseal HY are preferred.

The amount of the hydrocarbon diluent (B) is from 10 to 50 parts by weight per 100 parts by weight of the polyoxyalkylene polymer (A). If the amount of the component (B) is less than 10 parts by weight, the viscosity-reducing effect associated with the incorporation of the component (B) is less likely to be achieved, and sprayability may be insufficient. As a result, spray coating becomes difficult, or the discharge pressure during spray coating needs to be set high. Furthermore, a coating obtained by spray coating may exhibit mottling or uneven thickness. From the standpoint of sprayability, the amount of the component (B) is preferably 20 parts by weight or more, more preferably 30 parts by weight or more, and particularly preferably 40 parts by weight or more.

If the amount of the component (B) exceeds 50 parts by weight, a liquid component tends to undergo bleed-out from the surface of a cured product obtained by curing the curable composition. In addition, after the curable composition is sprayed, the resulting coating may be prone to sag before the composition is completely cured. In order to prevent bleed-out and sagging of the coating, the amount of the component (B) is particularly preferably 45 parts by weight or less.

### <<Plasticizer (C)>>

The curable composition for spray coating according to the present disclosure contains a plasticizer (C) that is a dicarboxylic acid ester containing a cyclic hydrocarbon group. The incorporation of the plasticizer (C) together with the hydrocarbon diluent (B) can reduce the viscosity of the curable composition for spray coating, thereby improving the sprayability of the composition.

The plasticizer (C) is a dicarboxylic acid ester containing a cyclic hydrocarbon group. This compound exhibits good compatibility with the hydrocarbon diluent (B), and the two components readily form a uniform mixture. Accordingly, separation between the components is unlikely to occur in the curable composition. This can contribute to good physical properties of the resulting cured coating.

The cyclic hydrocarbon group may be an aromatic hydrocarbon group or an alicyclic hydrocarbon group. From the standpoint of compatibility with the hydrocarbon diluent (B), an alicyclic hydrocarbon group is preferred. The alicyclic hydrocarbon group is, for example, a cyclohexane ring.

Specific examples of alicyclic compounds usable as the cyclic hydrocarbon group-containing dicarboxylic acid ester include cyclohexanedicarboxylic acid esters such as diisononyl 1,2-cyclohexanedicarboxylate (one specific example is Hexamoll DINCH, manufactured by BASF). Examples of aromatic compounds include: phthalic acid esters such as dibutyl phthalate, diisononyl phthalate (DINP), diheptyl phthalate, di(2-ethylhexyl) phthalate, diisodecyl phthalate (DIDP), and butyl benzyl phthalate; and terephthalic acid esters such as bis(2-ethylhexyl)-1,4-benzenedicarboxylate.

The amount of the plasticizer (C) is from 30 to 90 parts by weight per 100 parts by weight of the polyoxyalkylene polymer (A). If the amount of the component (C) is less than 30 parts by weight, the viscosity-reducing effect associated with the incorporation of the component (C) is less likely to be achieved, and sprayability may be insufficient. When the amount of the component (B) is increased to compensate for deficiency of the component (C), the aforementioned bleed-out is likely to occur. From the standpoint of sprayability and prevention of bleed-out, the amount of the component (C) is preferably 40 parts by weight or more and more preferably 50 parts by weight or more.

If the amount of the component (C) exceeds 90 parts by weight, the amount of the component (B) relatively decreases. Thus, the viscosity-reducing effect associated with the incorporation of the component (B) is weakened, resulting in insufficient sprayability. In addition, the applied coating may be prone to sag. From the standpoint of sprayability and prevention of sagging of the applied coating, the amount of the component (C) is preferably 80 parts by weight or less, more preferably 70 parts by weight or less, and even more preferably 60 parts by weight or less.

The total amount of the hydrocarbon diluent (B) and the plasticizer (C) may be set as appropriate, provided that the respective amounts of these components fall within the ranges described above. In order both to ensure good sprayability and to prevent sagging of the applied coating, the total amount is preferably from 70 to 120 parts by weight, more preferably from 80 to 110 parts by weight, and particularly preferably from 85 to 105 parts by weight per 100 parts by weight of the polyoxyalkylene polymer (A).

The ratio between the amount of the hydrocarbon diluent (B) and the amount of the plasticizer (C) ((C)/(B)) may be set as appropriate, provided that the respective amounts of these components fall within the ranges described above. Preferably, the ratio by weight of the component (C) to the component (B) is from 0.8 to 3.0. When the ratio (C)/(B) falls within this range, good sprayability is achieved due to the viscosity-reducing effect provided by the combined use of the components (B) and (C), and at the same time, bleed-out attributable to the component (B) is likely to be avoided. In addition, sagging of the applied coating is more reliably prevented.

The ratio (C)/(B) is more preferably 0.9 or more and even more preferably 1.0 or more. The ratio is more preferably 2.0 or less, even more preferably 1.5 or less, and particularly preferably 1.2 or less.

The ratio of the total amount of the polyoxyalkylene polymer (A) and the plasticizer (C) to the amount of the hydrocarbon diluent (B) ([(A) + (C)]/(B)) may be set as appropriate, provided that the respective amounts of the components fall within the ranges described above. Preferably, the ratio by weight of the total amount of the components (A) and (C) to the component (B) is from 2.6 to 7.0. When the ratio [(A) + (C)]/(B) falls within this range, good sprayability is achieved due to the viscosity-reducing effect provided by blending the component (A) with the components (B) and (C), and at the same time, bleed-out attributable to the component (B) is likely to be avoided. In addition, sagging of the applied coating is more reliably prevented.

The ratio [(A) + (C)]/(B) is more preferably 2.8 or more and even more preferably 3.0 or more. The ratio is more preferably 6.0 or less, even more preferably 5.0 or less, and particularly preferably 4.0 or less.

### <<Polyamide Rheology Modifier (D)>>

The curable composition for spray coating according to the present disclosure contains a polyamide rheology modifier (D). The incorporation of the polyamide rheology modifier (D) can prevent the applied coating from sagging immediately after the curable composition is sprayed. As a result, the cured coating obtained by curing the applied coating has a good appearance and is able to exhibit uniform physical properties. Polyamide rheology modifiers are sometimes referred to as polyamide waxes or fatty acid amides.

Rheology modifiers other than polyamide compounds are also commercially available. However, when a rheology modifier other than a polyamide compound is used alone without the polyamide rheology modifier (D), it may become difficult to prevent sagging of the applied coating, or the sprayability of the curable composition may be compromised due to an excessive increase in viscosity of the composition.

Any suitable commercially available product may be used as the polyamide rheology modifier (D). Specific examples include DISPARLON^{TM} manufactured by Kusumoto Chemicals, Ltd., and Crayvallac^{TM} SL, Crayvallac^{TM} SLX, Crayvallac^{TM} SLT, and Crayvallac^{TM} SLW manufactured by ARKEMA. Among these, Crayvallac^{TM} SLT is particularly preferred.

The amount of the polyamide rheology modifier (D) is from 0.6 to 7 parts by weight per 100 parts by weight of the polyoxyalkylene polymer (A). If the amount of the component (C) is less than 0.6 parts by weight, the effect on preventing sagging of the applied coating is insufficient. The amount is preferably 0.7 parts by weight or more, more preferably 1 part by weight or more, and even more preferably 2 parts by weight or more. Conversely, if the amount exceeds 7 parts by weight, the sprayability of the curable composition may be compromised due to an excessive increase in viscosity of the composition. The amount is preferably 6 parts by weight or less and more preferably 5 parts by weight or less.

The curable composition for spray coating according to the present disclosure may contain only the polyamide rheology modifier (D) as a rheology modifier. Alternatively, the composition may contain another rheology modifier in addition to the polyamide rheology modifier (D). In the latter case, the amount of the rheology modifier other than the component (D) is preferably not more than that of the component (D).

### <<Filler (E)>>

The curable composition for spray coating according to the present disclosure preferably contains a filler (E) in order to enhance the strength of the cured coating.

Examples of the filler (E) include, but are not limited to, ground calcium carbonate, colloidal calcium carbonate, magnesium carbonate, diatomite, clay, talc, titanium oxide, fumed silica, precipitated silica, crystalline silica, molten silica, silicic anhydride, hydrated silicic acid, alumina, carbon black, ferric oxide, aluminum fines, zinc oxide, activated zinc oxide, PVC powder, PMMA powder, and glass fibers or filaments. Organic balloons or inorganic balloons may also be used to reduce the weight (or reduce the specific gravity) of the composition. One filler may be used alone as the filler (E), or a combination of two or more fillers may be used as the filler (E).

Calcium carbonate is preferably used as the filler (E), because its use tends to suppress an increase in viscosity of the curable composition and thereby further improve the sprayability of the composition.

The calcium carbonate used may be ground calcium carbonate or precipitated calcium carbonate. In order both to ensure good sprayability and to prevent sagging of the applied coating, ground calcium carbonate is more preferred. The term "ground calcium carbonate" as used herein refers to calcium carbonate obtained by crushing limestone and classifying the crushed particles.

The ground calcium carbonate used is particularly preferably surface-treated ground calcium carbonate. In this case, the surface treatment agent is not limited to a particular type, but is preferably an organic material and particularly preferably a fatty acid or a fatty acid ester. A commercially available product may be used as the surface-treated ground calcium carbonate.

When the filler (E) is incorporated, its amount may, for example, be from about 10 to about 50 wt% based on 100 wt% of the total weight of the curable composition for spray coating according to the present disclosure. The amount of the filler (E) is preferably from 20 to 40 wt%. When the amount of the filler (E) falls within this range, the sprayability of the curable composition can be maintained at a desired level while achieving the strength-enhancing effect associated with the incorporation of the component (E). In addition, sagging of the applied coating is more reliably prevented. The amount of the component (E) is more preferably from 25 to 35 wt%.

When calcium carbonate is used as the filler (E), the calcium carbonate may be used alone or in combination with another filler. From the standpoint of sprayability, the proportion of calcium carbonate in the total amount of the filler (E) is preferably from 30 to 100 wt%, more preferably from 60 to 100 wt%, and particularly preferably from 80 to 100 wt%.

### <<Curing Catalyst (F)>>

The curable composition for spray coating according to the present disclosure preferably contains a curing catalyst (F) (also referred to as a "silanol condensation catalyst") to induce hydrolysis and condensation of the reactive silicon groups of the polyoxyalkylene polymer (A) and thereby accelerate the curing reaction of the curable composition.

Examples of the curing catalyst (F) include organotin compounds, metal carboxylates, amine compounds, carboxylic acids, and alkoxy metals.

Specific examples of organotin compounds include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin oxide, a reaction product of dibutyltin oxide and a silicate compound, a reaction product of dioctyltin oxide and a silicate compound, and a reaction product of dibutyltin oxide and a phthalic acid ester.

Specific examples of metal carboxylates include tin carboxylates, bismuth carboxylates, titanium carboxylates, zirconium carboxylates, iron carboxylates, potassium carboxylates, and calcium carboxylates. The metal carboxylate used may be a combination of any of various carboxylic acids and any of various metals. Specific examples include iron 2-ethylhexanoate (divalent), iron 2-ethylhexanoate (trivalent), titanium 2-ethylhexanoate (tetravalent), vanadium 2-ethylhexanoate (trivalent), calcium 2-ethylhexanoate (divalent), potassium 2-ethylhexanoate (monovalent), barium 2-ethylhexanoate (divalent), manganese 2-ethylhexanoate (divalent), nickel 2-ethylhexanoate (divalent), cobalt 2-ethylhexanoate (divalent), zirconium 2-ethylhexanoate (tetravalent), iron neodecanoate (divalent), iron neodecanoate (trivalent), titanium neodecanoate (tetravalent), vanadium neodecanoate (trivalent), calcium neodecanoate (divalent), potassium neodecanoate (monovalent), barium neodecanoate (divalent), zirconium neodecanoate (tetravalent), iron oleate (divalent), iron oleate (trivalent), titanium oleate (tetravalent), vanadium oleate (trivalent), calcium oleate (divalent), potassium oleate (monovalent), barium oleate (divalent), manganese oleate (divalent), nickel oleate (divalent), cobalt oleate (divalent), zirconium oleate (tetravalent), iron naphthenate (divalent), iron naphthenate (trivalent), titanium naphthenate (tetravalent), vanadium naphthenate (trivalent), calcium naphthenate (divalent), potassium naphthenate (monovalent), barium naphthenate (divalent), manganese naphthenate (divalent), nickel naphthenate (divalent), cobalt naphthenate (divalent), and zirconium naphthenate (tetravalent).

Specific examples of amine compounds include: amines such as octylamine, 2-ethylhexylamine, laurylamine, and stearylamine; nitrogen-containing heterocyclic compounds such as pyridine, 1,8-diazabicyclo[5.4.0]undec-7-ene (DBU), and 1,5-diazabicyclo[4.3.0]non-5-ene (DBN); guanidines such as guanidine, phenylguanidine, and diphenylguanidine; biguanides such as butylbiguanide, 1-*o*-tolylbiguanide, and 1-phenylbiguanide; amino group-containing silane coupling agents; and ketimine compounds.

Specific examples of carboxylic acids include acetic acid, propionic acid, butyric acid, 2-ethylhexanoic acid, lauric acid, stearic acid, oleic acid, linoleic acid, neodecanoic acid, and versatic acid.

Specific examples of alkoxy metals include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

In addition, fluorine anion-containing compounds, photoacid generators, or photobase generators may also be used as the curing catalyst (F).

A combination of two or more different catalysts may be used as the curing catalyst (F).

The amount of the curing catalyst (F) is preferably from 0.001 to 20 parts by weight, more preferably from 0.01 to 15 parts by weight, and particularly preferably from 0.1 to 10 parts by weight per 100 parts by weight of the polyoxyalkylene polymer (A).

### <<Other Components>>

The curable composition for spray coating according to the present disclosure may contain additional components in addition to the reactive silicon group-containing polyoxyalkylene polymer (A), the hydrocarbon diluent (B), the plasticizer (C), the polyamide rheology modifier (D), the filler (E), and the curing catalyst (F). Examples of additional components that may be added include an adhesion promoter, an antioxidant, a light stabilizer, an ultraviolet absorber, a property modifier, a tackifying resin, an epoxy group-containing compound, a photocurable material, an oxygen-curable material, an epoxy resin, and another resin. If necessary, various additives may be further added to the curable composition for spray coating according to the present disclosure in order to adjust the physical properties of the curable composition or the cured product. Examples of such additives include a surface modifier, a blowing agent, a curability modifier, a flame retardant, a silicate, a radical inhibitor, a metal deactivator, an antiozonant, a phosphorus-based peroxide decomposer, a lubricant, a pigment, and a fungicide.

### <Adhesion Promoter>

An adhesion promoter may be incorporated into the curable composition for spray coating according to the present disclosure. A silane coupling agent or a reaction product of the silane coupling agent can be used as the adhesion promoter.

Specific examples of silane coupling agents include: amino group-containing silanes such as γ-aminopropyltrimethoxysilane, γ-aminopropylmethyldimethoxysilane, *N*-β-aminoethyl-γ-aminopropyltrimethoxysilane, *N*-β-aminoethyl-γ-aminopropylmethyldimethoxysilane, *N-*phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane.

Condensation products of various silane coupling agents can also be used, such as a condensation product of an aminosilane and a condensation product of an aminosilane and another alkoxysilane. Reaction products of various silane coupling agents can also be used, such as a reaction product of an aminosilane and an epoxysilane and a reaction product of an aminosilane and a (meth)acrylic group-containing silane. Specific examples of these condensation or reaction products include Dynasylan 1146 and Dynasylan 1124 (manufactured by EVONIK).

One adhesion promoter may be used alone, or two or more adhesion promoters may be used in combination.

The amount of the silane coupling agent incorporated is preferably from 0.1 to 20 parts by weight and particularly preferably from 0.5 to 10 parts by weight per 100 parts by weight of the polyoxyalkylene polymer (A).

### <Antioxidant>

An antioxidant (anti-aging agent) may be incorporated into the curable composition for spray coating according to the present disclosure. The use of an antioxidant can enhance the weather resistance of the cured product. Examples of antioxidants include hindered phenol antioxidants, monophenol antioxidants, bisphenol antioxidants, and polyphenol antioxidants.

Specific examples include BHT, Irganox 245, Irganox 1010, Irganox 1035, Irganox 1076, Irganox 1135, Irganox 1330, Irganox 1520, and SONGNOX 1076. The following hindered amine light stabilizers can also be used: Tinuvin 622LD, Tinuvin 144, Tinuvin 292, CHIMASSORB 944LD, and CHIMASSORB 119FL (all manufactured by BASF); ADK STAB LA-57, ADK STAB LA-62, ADK STAB LA-67, ADK STAB LA-63, and ADK STAB LA-68 (all manufactured by ADEKA Corporation); Sanol LS-2626, Sanol LS-1114, and Sanol LS-744 (all manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used.

Specific examples of antioxidants are also mentioned in Japanese Laid-Open Patent Application Publication No. H4-283259 and Japanese Laid-Open Patent Application Publication No. H9-194731.

The amount of the antioxidant incorporated is preferably from 0.1 to 10 parts by weight and more preferably from 0.2 to 5 parts by weight per 100 parts by weight of the polyoxyalkylene polymer (A).

### <Light Stabilizer>

A light stabilizer may be incorporated into the curable composition for spray coating according to the present disclosure. The incorporation of a light stabilizer can prevent photooxidative degradation of the cured product. Examples of light stabilizers include benzotriazole compounds, hindered amine compounds, and benzoate compounds. Among these, hindered amine compounds are particularly preferred.

Examples of hindered amine light stabilizers include: Tinuvin 123, Tinuvin 144, Tinuvin 249, Tinuvin 292, Tinuvin 312, Tinuvin 622LD, Tinuvin 765, Tinuvin 770, Tinuvin 880, Tinuvin 5866, Tinuvin B97, CHIMASSORB 119FL, and CHIMASSORB 944LD (all manufactured by BASF); ADK STAB LA-57, LA-62, LA-63, LA-67, and LA-68 (all manufactured by ADEKA Corporation); Sanol LS-292, LS-2626, LS-765, LS-744, and LS-1114 (all manufactured by Sankyo Lifetech Co., Ltd.); SABOSTAB UV91, SABOSTAB UV119, SONGSORB CS5100, SONGSORB CS622, and SONGSORB CS944 (all manufactured by SONGWON); and Nocrac CD (manufactured by Ouchi Shinko Chemical Industrial Co., Ltd.).

The amount of the light stabilizer incorporated is preferably from 0.1 to 10 parts by weight and more preferably from 0.2 to 5 parts by weight per 100 parts by weight of the polyoxyalkylene polymer (A).

### <Ultraviolet Absorber>

An ultraviolet absorber may be incorporated into the curable composition for spray coating according to the present disclosure. The incorporation of an ultraviolet absorber can enhance the surface weather resistance of the cured product. Examples of ultraviolet absorbers include benzophenone compounds, benzotriazole compounds, salicylate compounds, triazine compounds, substituted acrylonitrile compounds, and metal chelate compounds. Among these, benzotriazole compounds are particularly preferred. Examples include Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all manufactured by BASF); and SONGSORB 3290 (manufactured by SONGWON). Examples of triazine compounds include Tinuvin 400, Tinuvin 405, Tinuvin 477, and Tinuvin 1577ED (all manufactured by BASF); and SONGSORB CS400 and SONGSORB 1577 (manufactured by SONGWON). Examples of benzophenone compounds include SONGSORB 8100 (manufactured by SONGWON).

The amount of the ultraviolet absorber incorporated is preferably from 0.1 to 10 parts by weight and more preferably from 0.2 to 5 parts by weight per 100 parts by weight of the polyoxyalkylene polymer (A).

Addworks IBC760 (manufactured by Clariant), which is a mixture of an antioxidant, a light stabilizer, and an ultraviolet absorber, can also be used.

### <Property Modifier>

A property modifier may be incorporated into the curable composition for spray coating according to the present disclosure in order to adjust the tensile properties of the cured product. Examples of property modifiers include, but are not limited to: alkylalkoxysilanes such as phenoxytrimethylsilane, methyltrimethoxysilane, dimethyldimethoxysilane, trimethylmethoxysilane, and *n*-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of such a property modifier can increase the hardness of the cured product of the curable composition for spray coating according to the present disclosure or conversely decrease the hardness and increase the elongation at break of the cured product. One of the property modifiers mentioned above may be used alone, or two or more thereof may be used in combination.

In particular, a compound hydrolyzable to form a compound having a monovalent silanol group in the molecule has the advantage of decreasing the modulus of the cured product without exacerbating the stickiness of the surface of the cured product. Particularly preferred is a compound the hydrolysis of which yields trimethylsilanol. Examples of the compound hydrolyzable to form a compound having a monovalent silanol group in the molecule include silicon compounds that are derivatives of alcohols such as hexanol, octanol, phenol, trimethylolpropane, glycerin, pentaerythritol, and sorbitol and the hydrolysis of which yields monosilanols. Specific examples include phenoxytrimethylsilane and tris((trimethylsiloxy)methyl)propane.

The amount of the property modifier incorporated is preferably from 0.1 to 10 parts by weight and more preferably from 0.5 to 5 parts by weight per 100 parts by weight of the polyoxyalkylene polymer (A).

### <Tackifier Resin>

A tackifier resin may be incorporated into the curable composition for spray coating according to the present disclosure in order to enhance the bond strength or adhesion to a substrate. The tackifier resin is not limited to a particular resin and may be a commonly used tackifier resin.

Specific examples include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifier resin incorporated is preferably from 2 to 100 parts by weight, more preferably from 5 to 50 parts by weight, and even more preferably from 5 to 30 parts by weight per 100 parts by weight of the polyoxyalkylene polymer (A).

### <Epoxy Group-Containing Compound>

An epoxy group-containing compound may be incorporated into the curable composition for spray coating according to the present disclosure. The use of an epoxy group-containing compound can enhance the recovery performance of the cured product. Examples of epoxy group-containing compounds include epoxidized unsaturated fats and oils, epoxidized unsaturated fatty acid esters, alicyclic epoxy compounds, epichlorohydrin derivatives, and mixtures of these derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use such an epoxy compound in an amount of 0.5 to 50 parts by weight per 100 parts by weight of the polyoxyalkylene polymer (A).

### <Photocurable Material>

A photocurable material may be incorporated into the curable composition for spray coating according to the present disclosure. The incorporation of a photocurable material can lead to the formation of a coating of the photocurable material on the surface of the cured product, resulting in a reduction in the stickiness of the cured product or an enhancement of the weather resistance of the cured product. A wide variety of such compounds are known, including organic monomers, oligomers, resins, and compositions containing them. Typical examples of usable photocurable materials include: an unsaturated acrylic compound that is a monomer or an oligomer having one or more unsaturated acrylic or methacrylic groups or a mixture of the monomer and the oligomer; polyvinyl cinnamates; and azide resins.

The amount of the photocurable material incorporated is preferably from 0.1 to 20 parts by weight and more preferably from 0.5 to 10 parts by weight per 100 parts by weight of the polyoxyalkylene polymer (A).

### <Oxygen-Curable Material>

An oxygen-curable material may be incorporated into the curable composition for spray coating according to the present disclosure. Examples of oxygen-curable materials include unsaturated compounds that are reactive with oxygen in the air. Such an oxygen-curable material reacts with oxygen in the air to form a cured layer in the vicinity of the surface of the cured product, thereby offering benefits such as preventing the surface of the cured product from being sticky and preventing the deposition of dirt and dust on the surface of the cured product. Specific examples of oxygen-curable materials include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers obtained by polymerization or copolymerization of diene compounds such as butadiene, chloroprene, isoprene, and 1,3-pentadiene. One of these materials may be used alone, or two or more thereof may be used in combination.

The amount of the oxygen-curable material incorporated is preferably from 0.1 to 20 parts by weight and more preferably from 0.5 to 10 parts by weight per 100 parts by weight of the polyoxyalkylene polymer (A). As described in Japanese Laid-Open Patent Application Publication No. H3-160053, it is recommended to use an oxygen-curable material in combination with a photocurable material.

### <Epoxy Resin>

An epoxy resin may also be used in the curable composition for spray coating according to the present disclosure. Examples of epoxy resins include bisphenol A epoxy resins and novolac epoxy resins.

The proportions of such an epoxy resin and the polyoxyalkylene polymer (A) are preferably such that the weight ratio of the polymer (A) to the epoxy resin is from 100/1 to 1/100.

When an epoxy resin is incorporated into the curable composition for spray coating according to the present disclosure, a curing agent for curing the epoxy resin is also preferably incorporated into the composition. The epoxy resin-curing agent to be used is not limited to a particular material and may be a commonly used epoxy resin-curing agent.

When an epoxy resin-curing agent is incorporated, the amount of the epoxy resin-curing agent is preferably from 0.1 to 300 parts by weight per 100 parts by weight of the epoxy resin.

### <<Viscosity of Curable Composition for Spray Coating>>

The curable composition for spray coating according to the present disclosure exhibits good sprayability. When the composition is used for spray coating under pressure, the viscosity of the composition is low. Thus, the composition preferably exhibits a low viscosity as measured in a high-shear region. Specifically, the viscosity measured at a temperature of 23 °C and a shear rate of 2000/sec is preferably 1.5 Pa·s or less. The viscosity is more preferably 1.4 Pa·s or less. The lower limit of the viscosity is not limited to a particular value. For example, the viscosity may be 0.1 Pa·s or more, is preferably 0.5 Pa·s or more, and is more preferably 1.0 Pa·s or more.

The curable composition for spray coating according to the present disclosure is resistant to sagging after spray coating. Thus, the composition preferably exhibits a high viscosity as measured in a low-shear region. Specifically, the viscosity measured at a temperature of 23 °C and a shear rate of 2/sec is preferably 4 Pa·s or more. The viscosity is more preferably 6 Pa·s or more and even more preferably 8 Pa·s or more. The upper limit of the viscosity is not limited to a particular value. For example, the viscosity may be 30 Pa·s or less, is preferably 20 Pa ·s or less, and is more preferably 15 Pa·s or less.

As described in detail in Examples below, the viscosity at a shear rate of 2/sec is desirably measured as follows. The shear rate is increased from 0.1/sec to 2000/sec and then decreased from 2000/sec to 0.1/sec, and the viscosity is measured when the decreasing shear rate reaches 2/sec. The shear rate of 2/sec during the decreasing shear-rate sweep corresponds to a low-shear region after exposure to high shear. Accordingly, the viscosity measured at this shear rate is considered to be close to the viscosity of the composition in the coating freshly applied by spray coating.

### <<Preparation of Curable Composition for Spray Coating>>

The curable composition for spray coating according to the present disclosure can be prepared as a one-part system all the components of which are blended together and hermetically stored and which cures under the action of moisture in the air after being applied to a substrate. The curable composition may be prepared as a two-part system consisting of a composition containing the polymer (A) and a curing agent blend which is prepared separately from the composition by blending components such as a curing catalyst, a filler, a plasticizer, and water. In the case of this two-part system, the composition and the curing agent blend are mixed prior to use. From the standpoint of workability, it is preferable to prepare the curable composition as a one-part system.

When the curable composition is prepared as a one-part system, all the components are blended together beforehand. Thus, it is preferable that any water-containing component be dried to remove water before use or be dehydrated by means such as pressure reduction during blending or kneading. The storage stability of the curable composition can be further improved by not only performing the drying or dehydration but also adding an alkoxysilane compound serving as a dehydration agent, such as *n*-propyltrimethoxysilane, vinyltrimethoxysilane, phenyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

The amount of the dehydration agent, particularly a water-reactive silicon compound such as vinyltrimethoxysilane, is preferably from 0.1 to 20 parts by weight and more preferably from 0.5 to 10 parts by weight per 100 parts by weight of the polyoxyalkylene polymer (A).

### <<Applications of Curable Composition for Spray Coating>>

The curable composition for spray coating according to the present disclosure is used by spraying the composition onto a surface of a substrate and then curing the composition to form a cured coating.

Examples of tools used for this spray coating include, but are not limited to: an air spray device designed to atomize a coating material by applying compressed air from a compressor to the coating material; an airless spray device designed to atomize a coating material by applying pressure to the coating material without air and ejecting the coating material through a nozzle; an HVLP spray device designed to atomize a coating material using a large volume of air at low pressure; and an electrostatic spray device designed to electrically charge a coating material.

An airless spray device is preferably used to achieve efficient spray coating over a wide area of a large substrate such as an outer wall of a building. The curable composition for spray coating according to the present disclosure is suitable for spray coating using an airless spray device and exhibits good sprayability in such a spray coating process. Good sprayability can be achieved even when the discharge pressure of the airless spray device is set relatively low.

The discharge pressure (also referred to as atomization pressure) of the airless spray device may be set as appropriate, and may, for example, be from 0.5 to 20 MPa. The discharge pressure is preferably at least 5 MPa, more preferably at least 10 MPa, and even more preferably at least 15 MPa.

Examples of substrates coated with the curable composition for spray coating according to the present disclosure include, but are not limited to, outer walls, roofs, and rooftops of buildings. In particular, the curable composition can be used to form a coating that seamlessly covers the entirety of an outer wall material. Such a coating can function as a waterproof coating. That is, the curable composition for spray coating according to the present disclosure can be used to form a waterproof coating on a substrate surface by spray coating. The cured product of the polyoxyalkylene polymer (A) generally exhibits moisture permeability; accordingly, the waterproof coating can function as a moisture-permeable waterproof coating.

It should be understood that the above-described use as a waterproof coating differs from the use as a sealing material for filling gaps or seams of a substrate.

Examples of materials forming the substrates include, but are not limited to: porous materials such as siding boards; concrete; CMU backup walls; mortar; stone; and metals.

The curing of the applied coating is not limited to particular conditions. For example, after spray coating, the applied coating may be left at normal temperature for about 1 to 5 days.

The thickness of the cured coating formed on the substrate surface is not limited to a particular range, and may, for example, be from about 100 µm to about 4 mm. The thickness is preferably from about 200 µm to about 3 mm and even more preferably from about 200 µm to 2 mm.

In the following items, preferred aspects of the present disclosure are listed. The present invention is not limited to the following items.

### [Item 1]

A curable composition for spray coating, containing:
100 parts by weight of a polyoxyalkylene polymer (A) having a reactive silicon group;
10 to 50 parts by weight of a hydrocarbon diluent (B);
30 to 90 parts by weight of a plasticizer (C) that is a dicarboxylic acid ester containing a cyclic hydrocarbon group; and
0.6 to 7 parts by weight of a polyamide rheology modifier (D).

### [Item 2]

The curable composition according to item 1, wherein the hydrocarbon diluent (B) includes at least one diluent selected from the group consisting of naphthenic diluents and paraffinic diluents.

### [Item 3]

The curable composition according to item 1 or 2, wherein the hydrocarbon diluent (B) has a boiling point of 250 °C or higher.

### [Item 4]

The curable composition according to any one of items 1 to 3, further containing a filler (E), wherein
an amount of the filler (E) is from 20 to 40 wt% based on 100 wt% of a total weight of the curable composition.

### [Item 5]

The curable composition according to item 4, wherein the filler (E) includes calcium carbonate.

### [Item 6]

The curable composition according to item 5, wherein the calcium carbonate is surface-treated ground calcium carbonate.

### [Item 7]

The curable composition according to any one of items 1 to 6, wherein a ratio by weight (C)/(B) of the plasticizer (C) to the hydrocarbon diluent (B) is from 0.8 to 3.0.

### [Item 8]

The curable composition according to any one of items 1 to 7, wherein a ratio by weight [(A) + (C)]/(B) of a total amount of the polyoxyalkylene polymer (A) and the plasticizer (C) to the hydrocarbon diluent (B) is from 2.6 to 7.0.

### [Item 9]

The curable composition according to any one of claims 1 to 8, wherein an average number of reactive silicon groups per end in the polyoxyalkylene polymer (A) is 0.85 or more.

### [Item 10]

The curable composition according to any one of items 1 to 9, wherein a viscosity of the curable composition, as measured at a temperature of 23 °C and a shear rate of 2/sec, is 4 Pa·s or more.

### [Item 11]

The curable composition according to any one of items 1 to 10, wherein a viscosity of the curable composition, as measured at a temperature of 23 °C and a shear rate of 2000/sec, is 1.5 Pa·s or less.

### [Item 12]

A cured coating formed by spraying the curable composition according to any one of items 1 to 11 and curing the sprayed composition.

### [Item 13]

A method for producing a cured coating, the method including:
spraying the curable composition according to any one of items 1 to 11 onto a surface of a substrate; and
curing the sprayed composition.

### Examples

The present invention will be described in greater detail below with reference to examples. The present invention is not limited to the examples presented below.

### (Number-Average Molecular Weight)

The number-average molecular weights in the examples are GPC molecular weights measured under the following conditions.
Delivery system: HLC-8220 GPC, manufactured by Tosoh Corporation
Column: TSKgel SuperH series, manufactured by Tosoh Corporation
Solvent: THF
Molecular weight: Polystyrene equivalent
Measurement temperature: 40 °C

The end group-equivalent molecular weights in the examples are molecular weights each of which was determined by measuring the hydroxy value and the iodine value using the measurement methods of JIS K 1557 and JIS K 0070, respectively, and by calculating the molecular weight from the hydroxy value and the iodine value in consideration of the architecture of the organic polymer (the degree of branching which depends on the polymerization initiator used).

In the examples, the average number of introduced silyl groups per polymer end or per polymer molecule was calculated via NMR analysis.

### (Synthesis Example 1) A-1

Propylene oxide was polymerized using polyoxypropylene glycol having a number-average molecular weight of about 4,500 as an initiator in the presence of a zinc hexacyanocobaltate-glyme complex catalyst. This polymerization yielded polyoxypropylene (P-1) terminated with hydroxy groups and having a number-average molecular weight of 14,300 (end group-equivalent molecular weight = 9,132) and a dispersity Mw/Mn of 1.21. To the hydroxy-terminated polyoxypropylene (P-1) was added a 28% methanol solution of sodium methoxide in an amount of 1.2 molar equivalents per molar equivalent of the hydroxy groups of the polyoxypropylene (P-1). After methanol was distilled off under vacuum, allyl chloride was added in an amount of 1.5 molar equivalents per molar equivalent of the hydroxy groups of the polymer (P-1), thereby converting the terminal hydroxy groups to allyl groups. Allyl chloride remaining unreacted was removed by evaporation under reduced pressure. The resulting unpurified polyoxypropylene was mixed and stirred with *n*-hexane and water, and the mixture was centrifuged to remove water. Hexane was evaporated from the resulting hexane solution under reduced pressure, thereby removing metal salts from the polymer. In this manner, polyoxypropylene (Q-1) terminated with allyl groups was obtained.

To 500 g of the polymer (Q-1) was added 50 µl of a solution of platinum-divinyldisiloxane complex (isopropanol solution with a platinum concentration of 3 wt%), and 8.4 g of dimethoxymethylsilane was slowly added dropwise under stirring. The reaction was allowed to proceed at 100 °C for 2 hours, after which dimethoxymethylsilane remaining unreacted was distilled off under reduced pressure to obtain polyoxypropylene (A-1) terminated with dimethoxymethylsilyl groups and having a number-average molecular weight of 14,600. The polymer (A-1) was found to have an average of 0.8 dimethoxymethylsilyl groups per end and 1.5 dimethoxymethylsilyl groups per molecule.

### (Synthesis Example 2) A-2

To the polymer (Q-1) were added 50 ppm of (bicyclo[2.2.1]hepta-2,5-diene)dichlororuthenium(II) polymer (manufactured by Sigma-Aldrich) and 130 ppm of 2,3-dibromonorbornadiene, and the mixture was stirred at 90 °C for 10 minutes. Dimethoxymethylsilane was further added in an amount of 4.0 molar equivalents per molar equivalent of the allyl groups of the polymer (Q-1), and the mixture was stirred for 1 hour. Volatile components were distilled off under reduced pressure to obtain polyoxypropylene (A-2) terminated with dimethoxymethylsilyl groups and having a number-average molecular weight of 14,600. The polymer (A-2) was found to have an average of 0.93 dimethoxymethylsilyl groups per end.

### (Examples 1 to 7, Comparative Examples 1 to 3, and Reference Examples 1 and 2)

First, the polymer (A-1) was mixed with a plasticizer, a diluent, fillers (calcium carbonate and titanium oxide), a polyamide rheology modifier, an ultraviolet absorber, and a light stabilizer according to the formulations (proportions by weight) shown in Table 1. The mixture was stirred using a planetary centrifugal mixer (High-Speed Rotor HR005-04V, manufactured by Mitsuboshi Kogyo Co., Ltd.). After the mixture was cooled to below 50 °C, A-171 (vinyltrimethoxysilane, manufactured by Momentive Performance Materials Holdings Inc.) as a dehydration agent, A-1120 (*N*-(2-aminoethyl)-3-aminopropyltrimethoxysilane, manufactured by Momentive Performance Materials Holdings Inc.) as an adhesion promoter, and Neostann U-220H (dibutyltin bis(acetylacetonate), manufactured by Nitto Kasei Co., Ltd.) as a curing catalyst were added sequentially. The mixture was thoroughly stirred using a spatula and was subsequently stirred and degassed using the planetary centrifugal mixer. In this manner, curable compositions were prepared.

In the preparation of the curable compositions subjected to the sprayability test, stirring was performed using a 50-L twin-screw mixer (manufactured by Inoue Mfg., Inc.).

### (Bleeding Test)

Each of the prepared curable compositions was placed in a mold having an inner diameter of 40 mm and a depth of 10 mm, and the surface was leveled. The composition was cured at 23 °C and 50% relative humidity and was then left at 5 °C (without relative humidity control) for the number of days indicated in Table 1. The surface of the cured product was touched with a finger. When no liquid compound adhered to the finger, bleed-out was determined not to have occurred ("No"); when a liquid compound adhered to the finger, bleed-out was determined to have occurred ("Yes"). The results are shown in Table 1.

### (Sprayability Test)

Each of the prepared curable compositions was evaluated for sprayability at an atomization pressure of 14 MPa using an electric airless spray device, Graco Mark V, equipped with a #531 spray tip. The hose length was 30 m. While the distance between the surface to be coated and the spray nozzle was maintained at approximately 50 cm, the composition was sprayed once over a horizontal length of about 110 cm. Afterward, the coated surface was inspected for the presence or absence of mottling. As used herein, the term "mottling" refers to a phenomenon in which uncoated portions appear as streaks. When mottling occurred, a rating of "Fail" was assigned; when no mottling occurred, a rating of "Pass" was assigned. The results are shown in Table 1.

The terms used in Tables 1 to 4 refer to the following materials.
DINP (diisononyl phthalate, J-PLUS Co., Ltd.)
DINCH (diisononyl 1,2-cyclohexanedicarboxylate, BASF)
Total Fluid D170 (hydrotreated light paraffin oil, TotalEnergies)
Hydroseal HY (hydrotreated light paraffin oil, TotalEnergies)
Hakuenka CCR (precipitated calcium carbonate, Shiraishi Kogyo Kaisha, Ltd.)
WHITON SB (ground calcium carbonate, Shiraishi Calcium Kaisha, Ltd.)
Omyacarb 1T-JI (ground calcium carbonate, mean particle diameter (D50): 1.8 µm, Omya)
Omyacarb 2T-JI (ground calcium carbonate, mean particle diameter (D50): 2.8 µm, Omya)
Omyacarb 5T-JI (ground calcium carbonate, mean particle diameter (D50): 4.9 µm, Omya)
Tipaque R-820 (rutile-type titanium oxide, Ishihara Sangyo Kaisha, Ltd.)
Crayvallac SLT (polyamide rheology modifier, ARKEMA)
Crayvallac SLW (polyamide rheology modifier, ARKEMA)
Viscoexcel-30 (synthetic calcium carbonate, Shiraishi Kogyo Kaisha, Ltd.)
Aerosil R974 (fumed silica, Nippon Aerosil Co., Ltd.)
BYK-R 606 (non-polyamide rheology modifier, BYK)
10 wt% CNF sol. (DINP dispersion of 10 wt% cellulose nanofibers)
TEG2EH (triethylene glycol bis(2-ethylhexanoate), Shandong Kexing Chemical Co., Ltd.)
Tinuvin 328 (benzotriazole ultraviolet absorber, BASF)
Tinuvin 770 (hindered amine light stabilizer, BASF)

**{Table 1]**

| | | Comp. 1 | Comp. 2 | Ex. 1 | Ex. 2 | Ex. 3 | Ex. 4 | Ex. 5 | Ref. 1 | Comp. 3 | Ex. 6 | Ex. 7 | Ref. 2 |
|---|---|---|---|---|---|---|---|---|---|---|---|---|---|
| MS polymer (A) | A-1 | 100 | 100 | 100 | 100 | 100 | 100 | 100 | 100 | 100 | 100 | 100 | 100 |
| Plasticizer (C) | DINP | 30 | 40 | 50 | 50 | 50 | 60 | 70 | 110 | | | | |
| | DINCH | | | | | | | | | 40 | 50 | 60 | 110 |
| Diluent (B) | Total Fluid D170 | 65 | 55 | 45 | 45 | | 35 | 25 | | 55 | 45 | 35 | |
| | Hydroseal HY | | | | | 45 | | | | | | | |
| CaCO₃ | CCR | 20 | 20 | 20 | | 20 | 20 | 20 | 20 | 20 | 20 | 20 | 20 |
| | SB | 75 | 75 | 75 | 95 | 75 | 75 | 75 | 75 | 75 | 75 | 75 | 75 |
| TiO₂ | R820 | 5 | 5 | 5 | 5 | 5 | 5 | 5 | 5 | 5 | 5 | 5 | 5 |
| Rheology mod. (D) | Crayvallac SLT | 3.0 | 3.0 | 3.0 | 3.0 | 3.0 | 3.0 | 3.0 | 3.0 | 3.0 | 3.0 | 3.0 | 3.0 |
| Antioxidant | Tinuvin 328 | 1 | 1 | 1 | 1 | 1 | 1 | 1 | 1 | 1 | 1 | 1 | 1 |
| | Tinuvin 770 | 1 | 1 | 1 | 1 | 1 | 1 | 1 | 1 | 1 | 1 | 1 | 1 |
| Dehydration agent | A-171 | 3 | 3 | 3 | 3 | 3 | 3 | 3 | 3 | 3 | 3 | 3 | 3 |
| Adhesion promoter | A-1120 | 3 | 3 | 3 | 3 | 3 | 3 | 3 | 3 | 3 | 3 | 3 | 3 |
| Catalyst | U-220H | 0.8 | 0.8 | 0.8 | 0.8 | 0.8 | 0.8 | 0.8 | 0.8 | 0.8 | 0.8 | 0.8 | 0.8 |
| Total | | 306.8 | 306.8 | 306.8 | 306.8 | 306.8 | 306.8 | 306.8 | 321.8 | 306.8 | 306.8 | 306.8 | 321.8 |
| Plasticizer/Diluent ratio | | 0.5 | 0.7 | 1.1 | 1.1 | 1.1 | 1.7 | 2.8 | | 0.7 | 1.1 | 1.7 | |
| (Polymer + Plasticizer)/Diluent ratio | | 2.0 | 2.5 | 3.3 | 3.3 | 3.3 | 4.6 | 6.8 | | 2.5 | 3.3 | 4.6 | |
| Bleeding | 23°C×3d | No | No | No | No | No | No | No | No | No | No | No | No |
| | 23°C×3d+5°C×1d | Yes | Yes | No | No | No | No | No | No | Yes | No | No | No |
| | 23°C×3d+5°C×90d | Yes | Yes | No | No | No (23°C×3d +5°C×7d) | No | No | No | Yes | No | No | No |
| Spray test | | - | - | Pass | Pass | - | - | - | Fail | - | - | - | Fail |

As shown in Table 1, in Examples 1 to 7, in which the amount of the hydrocarbon diluent (B) was within the range of 10 to 50 parts by weight, bleeding from the cured product was observed neither at normal temperature nor at low temperature. In contrast, in Comparative Examples 1 to 3, in which the amount of the hydrocarbon diluent (B) exceeded 50 parts by weight, bleeding occurred at low temperature. In Examples 1 and 2, the sprayability was evaluated as good.

The evaluation results shown for Reference Examples 1 and 2 were obtained when the hydrocarbon diluent (B) was not incorporated. Although no bleeding was observed in these Reference Examples, mottling occurred on the coated surface due to poor sprayability.

### (Examples 8 to 15, Comparative Examples 4 to 9, and Reference Examples 3 to 12)

First, the polymer (A-1) or (A-2) was mixed with a plasticizer, a diluent, fillers (calcium carbonate and titanium oxide), rheology modifiers, an ultraviolet absorber, and a light stabilizer according to the formulations (proportions by weight) shown in Tables 2 and 3. The mixture was stirred using a planetary centrifugal mixer (High-Speed Rotor HR005-04V, manufactured by Mitsuboshi Kogyo Co., Ltd.). After the mixture was cooled to below 50 °C, A-171 (vinyltrimethoxysilane, manufactured by Momentive Performance Materials Holdings Inc.) as a dehydration agent, A-1120 (*N*-(2-aminoethyl)-3-aminopropyltrimethoxysilane, manufactured by Momentive Performance Materials Holdings Inc.) as an adhesion promoter, and Neostann U-220H (dibutyltin bis(acetylacetonate), manufactured by Nitto Kasei Co., Ltd.) as a curing catalyst were added sequentially. The mixture was thoroughly stirred using a spatula and was subsequently stirred and degassed using the planetary centrifugal mixer. In this manner, curable compositions were prepared.

### (Viscosity)

The viscosity of each of the prepared curable compositions was measured using a Hybrid Rheometer Discovery HR-2 manufactured by TA Instruments. The plate diameter was 20 mm, and the gap between the plate and the sample stage was adjusted to 0.5 mm. At a sample stage temperature of 23 °C, the shear rate was changed from 0.1/s to 2000/s over 4 minutes (ascending shear rate), and subsequently changed from 2000/s to 0.1/s over the following 4 minutes (descending shear rate). The spray physical properties of the curable composition were evaluated based on the viscosities at 2000/s (ascending) and 2/s (descending).

The viscosity at 2000/s (ascending), measured in a high-shear region, is considered to be close to the viscosity of the composition at the moment of spray discharge. When the value of this viscosity was low, the composition was evaluated as having good sprayability (i.e., good workability). The viscosity at 2/s (descending), measured in a low-shear region after exposure to high shear, is considered to be close to the viscosity of the composition in the coating freshly applied by spray coating. A higher value of this viscosity was regarded as an indicator of higher resistance of the composition to sagging after spray coating (i.e., better finish after spray coating).

### (Tensile Properties)

Each of the prepared curable compositions was placed in a mold, and was aged at 23 °C and 50% relative humidity for 3 days and then at 50 °C for 4 days to prepare a sheet-shaped cured product having a thickness of about 3 mm. The sheet-shaped cured product was punched to prepare a No. 3 dumbbell-shaped specimen. This specimen was subjected to a tensile test at 23 °C and 50% relative humidity to measure the modulus at 50% elongation (M50), the modulus at 100% elongation (M100), and the strength at break. The measurement was performed using an Autograph (AGS-J, manufactured by Shimadzu Corporation) at a tensile speed of 500 mm/min.

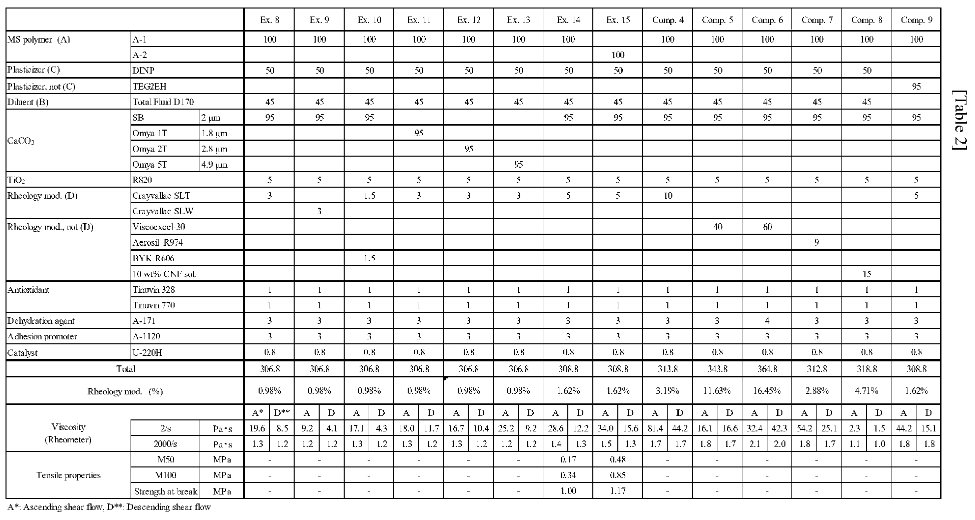

As shown in Table 2, in Examples 8 to 15, in which a polyamide rheology modifier was used, the compositions exhibited viscosities within desired ranges at 2000/s (ascending) and 2/s (descending); that is, both good sprayability and high resistance to sagging after spray coating were achieved.

Specifically, in Examples 8 to 15, the viscosity at 2000/s (ascending) was in the range of 1.2 to 1.5 Pa·s, and the viscosity at 2/s (descending) was not less than 4.1 Pa·s. This indicates that the compositions exhibit low viscosity during spray coating and can therefore be applied using a spray coater at a relatively low pressure. Such compositions can be considered to have excellent workability. It is also expected that, after being applied to a substrate surface by spray coating, the compositions exhibit moderately high viscosity and resist sagging. Such compositions can be considered to achieve a good finish after spray coating.

In Comparative Example 4, where the amount of the polyamide rheology modifier was as large as 10 parts by weight, and in Comparative Examples 5 to 7, where a rheology modifier that is not a polyamide modifier was used, the compositions exhibited viscosities of not less than 1.7 Pa·s at 2000/s (ascending). Applying these compositions via a spray coater would require high pressure. Such compositions cannot be regarded as having good workability.

In Comparative Example 8, which also employed a rheology modifier that is not a polyamide modifier, the viscosity at 2/s (descending) was extremely low, specifically less than 2 Pa·s. Such a composition is expected to sag readily after spray coating, and it would be difficult to achieve a satisfactory finish using this composition.

In Comparative Example 9, where a plasticizer described in Patent Literature 2 (glycol diester: TEG2EH shown in Table 2), which is not a cyclic hydrocarbon group-containing dicarboxylic acid ester, was used, the viscosity at 2000/s (ascending) was 1.8 Pa·s. This indicates that the composition has insufficient sprayability.

Example 15, in which the polymer (A-2) having an average of 0.93 dimethoxymethylsilyl groups per end was used, provided higher values for the tensile properties of the cured product than Example 14, in which the polymer (A-1) having an average of 0.83 dimethoxymethylsilyl groups per end was used. This suggests that the cured coating formed by spray coating is more resistant to impact or abrasion when the polymer (A-2) is used than when the polymer (A-1) is used.

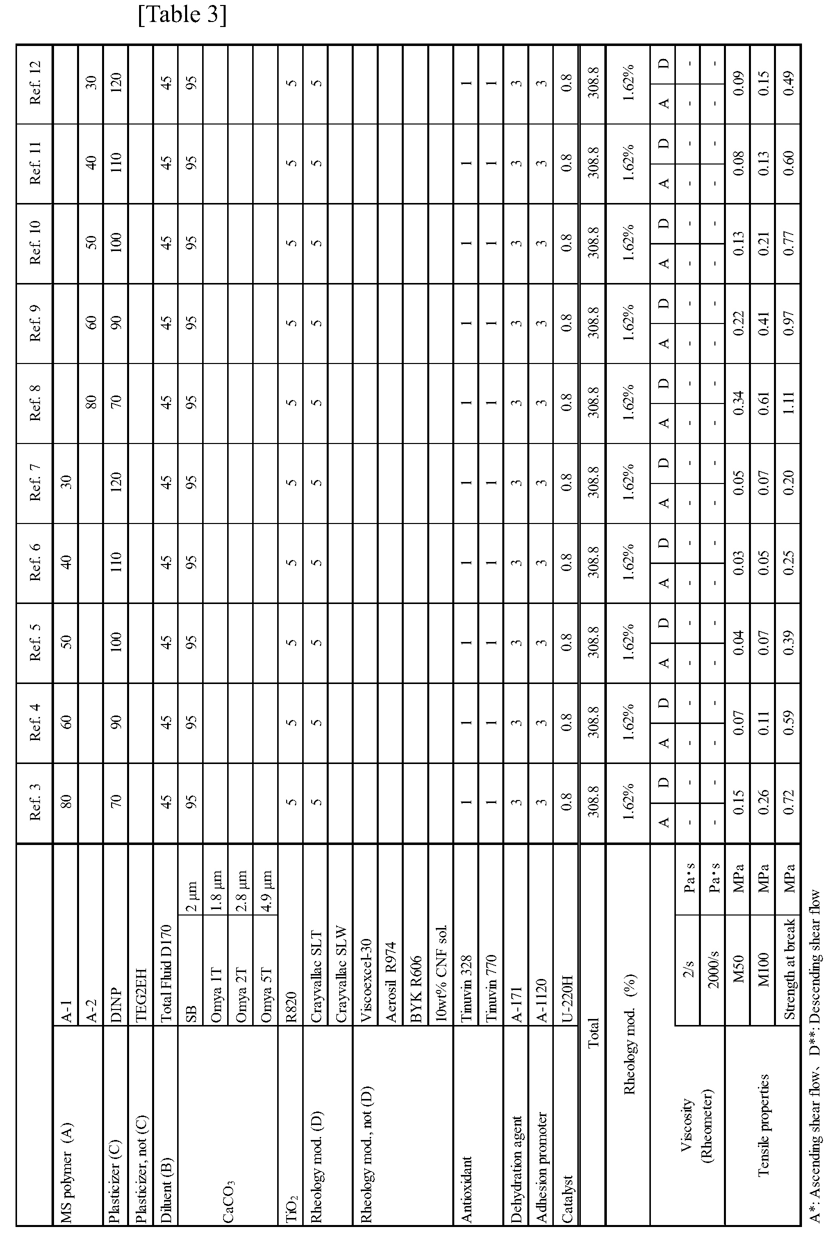

As seen from Table 3, Reference Examples 8 to 12, in which the polymer (A-2) having an average of 0.93 dimethoxymethylsilyl groups per end was used, provided higher values for the tensile properties of the cured product than Reference Examples 3 to 7, in which the polymer (A-1) having an average of 0.83 dimethoxymethylsilyl groups per end was uded. This further confirms that the cured coating formed by spray coating is more resistant to impact or abrasion when the polymer (A-2) is used than when the polymer (A-1) is used.

### (Examples 16 to 20)

First, the polymer (A-1) was mixed with a plasticizer, a diluent, fillers (calcium carbonate and titanium oxide), a rheology modifier, an ultraviolet absorber, and a light stabilizer according to the formulations (proportions by weight) shown in Table 4. The mixture was stirred using a planetary centrifugal mixer (High-Speed Rotor HR005-04V, manufactured by Mitsuboshi Kogyo Co., Ltd.). After the mixture was cooled to below 50 °C, A-171 (vinyltrimethoxysilane, manufactured by Momentive Performance Materials Holdings Inc.) as a dehydration agent, A-1120 (*N*-(2-aminoethyl)-3-aminopropyltrimethoxysilane, manufactured by Momentive Performance Materials Holdings Inc.) as an adhesion promoter, and Neostann U-220H (dibutyltin bis(acetylacetonate), manufactured by Nitto Kasei Co., Ltd.) as a curing catalyst were added sequentially. The mixture was thoroughly stirred using a spatula and was subsequently stirred and degassed using the planetary centrifugal mixer. In this manner, curable compositions were prepared.

In the preparation of the curable compositions subjected to the sprayability test, stirring was performed using a 50-L twin-screw mixer (manufactured by Inoue Mfg., Inc.).

### (Sprayability Test)

Each of the prepared curable compositions was evaluated for sprayability at an atomization pressure of 16 to 17 MPa using an electric airless spray device, Graco Mark V, equipped with a #523 or #531 spray tip. The hose length was 30 m. While the distance between the surface to be coated and the spray nozzle was maintained at approximately 50 cm, the composition was sprayed once over a horizontal length of about 110 cm. Afterward, the coated surface was inspected for the presence or absence of mottling and for the maximum and minimum coating thicknesses. In addition, spray coating was continued until a predetermined coating thickness was reached, and the thickness at which the composition began to sag was determined. The results are shown in Table 4.

**Table 4]**

| | | | | Ex. 16 | Ex. 17 | Ex. 18 | Ex. 19 | Ex. 20 |
|---|---|---|---|---|---|---|---|---|
| MS polymer (A) | | | A-1 | 100 | 100 | 100 | 100 | 100 |
| Plasticizer (C) | | | DINCH | 50 | 50 | 50 | 50 | 50 |
| Diluent (B) | | | Total Fluid D170 | 45 | 45 | 45 | 45 | 45 |
| CaCO₃ | | | WHITON SB | 95 | 95 | 95 | 95 | |
| | | | LITON A | | | | | 95 |
| TiO₂ | | | R820 | 5 | 5 | 5 | 5 | 5 |
| Rheology mod. (D) | | | Cravvallac SLT | 5 | 3 | 1.5 | 0.75 | 0.75 |
| | | | Aerosil R974 | | | | | |
| Antioxidant | | | Tinuvin 328 | 1 | 1 | 1 | 1 | 1 |
| | | | Tinuvin 770 | 1 | 1 | 1 | 1 | 1 |
| Dehydration agent | | | A-171 | 3 | 3 | 3 | 3 | 3 |
| Adhesion promoter | | | A-1120 | 3 | 3 | 3 | 3 | 3 |
| Catalyst | | | U-220H | 0.8 | 0.8 | 0.8 | 0.8 | 0.8 |
| Total | | | | 308.8 | 306.8 | 305.3 | 304.55 | 304.55 |
| Plasticizer/Diluent ratio | | | | 1.1 | 1.1 | 1.1 | 1.1 | 1.1 |
| (Polymer+Plasticizer)/Diluent ratio | | | | 3.3 | 3.3 | 3.3 | 3.3 | 3.3 |
| Rheology mod. (%) | | | | 1.6% | 1.0% | 0.5% | 0.2% | 0.2% |
| Ambient temp./humidity (degree C /%RH) | | | | 23 / 21.5 | 25 / 28 | 25 / 28 | 25 / 23 | 25 / 23 |
| Tem. of compound before spray (deg C) | | | | 15 | 23 | 22 | 22 | 22 |
| Hose length (d: 3/8 inch) | | | | 30 m | 30 m | 30 m | 30 m | 30 m |
| Sprayability | Spray pattern | Tip size | | #531 | #531 | #523 | #523 | #523 |
| | | Pressure (Initial value) | | 17 MPa | 16 MPa | 17 MPa | 17 MPa | 17 MPa |
| | Spray test* | | | 2 | 1 | 1 | 1 | 1 |
| | Thickness variation | a) Thick part thickness, | 1 way coat | a) 850 | a) 500 | a) 450 | a) 450 | a) 650 |
| | | b) Thin part thickness | (µm) | b) 500 | b) 450 | b) 350 | b) 350 | b) 450 |
| | | | Variation level | Small | Small | Small | Small | Small |
| Sagging | | Non-sag | mm | 3.0 | 2.0 | 1.1 | 0.60 | 0.70 |
| | | Sagging | mm | - | 2.4 | 1.4 | 0.70 | 0.75 |

| | | | | | | | | |
|---|---|---|---|---|---|---|---|---|
| *: 1: Good, 2: Good but slight streaks, 3: Some streaks, 4: Obvious streaks, 5: Most obvious streaks, 6: Bad (cannot atomize) | | | | | | | | |

The results for Examples 16 to 20 in Table 4 demonstrate that both good sprayability and high resistance to sagging after spray coating can be achieved by incorporating 0.6 parts by weight or more of the polyamide rheology modifier (D) per 100 parts by weight of the reactive silicon group-containing polyoxyalkylene polymer (A), in addition to the hydrocarbon diluent (B) and the plasticizer (C) which is a cyclic hydrocarbon group-containing dicarboxylic acid ester.

Conversely, in Comparative Examples (not listed in the table), in which the amount of the polyamide rheology modifier (D) was reduced to 0.5 parts by weight, the compositions readily sagged after spray coating. This result was confirmed by a preliminary test. Accordingly, the evaluation test for sprayability was not conducted in those cases.

## Claims

1. A curable composition for spray coating, comprising:
100 parts by weight of a polyoxyalkylene polymer (A) having a reactive silicon group;
10 to 50 parts by weight of a hydrocarbon diluent (B);
30 to 90 parts by weight of a plasticizer (C) that is a dicarboxylic acid ester containing a cyclic hydrocarbon group; and
0.6 to 7 parts by weight of a polyamide rheology modifier (D).

2. The curable composition according to claim 1, wherein the hydrocarbon diluent (B) comprises at least one diluent selected from the group consisting of naphthenic diluents and paraffinic diluents.

3. The curable composition according to claim 1 or 2, wherein the hydrocarbon diluent (B) has a boiling point of 250 °C or higher.

4. The curable composition according to claim 1 or 2, further comprising a filler (E), wherein
an amount of the filler (E) is from 20 to 40 wt% based on 100 wt% of a total weight of the curable composition.

5. The curable composition according to claim 4, wherein the filler (E) comprises calcium carbonate.

6. The curable composition according to claim 5, wherein the calcium carbonate is surface-treated ground calcium carbonate.

7. The curable composition according to claim 1 or 2, wherein a ratio by weight (C)/(B) of the plasticizer (C) to the hydrocarbon diluent (B) is from 0.8 to 3.0.

8. The curable composition according to claim 1 or 2, wherein a ratio by weight [(A) + (C)]/(B) of a total amount of the polyoxyalkylene polymer (A) and the plasticizer (C) to the hydrocarbon diluent (B) is from 2.6 to 7.0.

9. The curable composition according to claim 1 or 2, wherein an average number of reactive silicon groups per end in the polyoxyalkylene polymer (A) is 0.85 or more.

10. The curable composition according to claim 1 or 2, wherein a viscosity of the curable composition, as measured at a temperature of 23 °C and a shear rate of 2/sec, is 4 Pa·s or more.

11. The curable composition according to claim 1 or 2, wherein a viscosity of the curable composition, as measured at a temperature of 23 °C and a shear rate of 2000/sec, is 1.5 Pa·s or less.

12. A cured coating formed by spraying the curable composition according to claim 1 or 2 and curing the sprayed composition.

13. A method for producing a cured coating, the method comprising:
spraying the curable composition according to claim 1 or 2 onto a surface of a substrate; and
curing the sprayed composition.
